# DEMANDE DE BREVET EUROPEEN

(11) **EP 2 366 506 A2**
(43) Date de publication de la demande: **21.09.2011**
(21) Numéro de dépôt: 11157533.8
(22) Date de dépôt: 09.03.2011
(51) Int. Cl.: B25J 15/02

(54) **Dispositif de préhension pour le conditionnement de fournitures**

(30) Priorité: 16.03.2010 CH 3732010
(71) Demandeur: Stoco S.A., 2028 Vaumarcus (CH)
(72) Inventeur: Jaquier, Christophe, 2027, Fresens (CH)
(74) Mandataire: GLN

(57) **Abrégé**

La présente invention concerne un dispositif de préhension pour le conditionnement de fournitures, comportant un réservoir (4) de fournitures (1), un mécanisme d'extraction pour distribuer les fournitures (1) contenues dans le réservoir (4), ledit mécanisme d'extraction coopérant avec un moyen de commande pour actionner ledit mécanisme d'extraction lors de la distribution des fournitures (1), caractérisé en ce qu'il comporte un embout de préhension (5) pour saisir une à une les fournitures (1) et pour les insérer dans le réservoir (4), la préhension étant effectuée automatiquement par l'intermédiaire d'une pression exercée sur chaque fourniture (1) à prélever par l'extrémité libre (5a) de l'embout de préhension (5), ledit embout de préhension (5) comportant également un moyen de rétention pour retenir les fournitures (1), ledit moyen de rétention restant activé en l'absence d'actionnement du mécanisme d'extraction.

## Description

### Domaine technique

La présente invention se rapporte au domaine technique général des machines de fabrication et/ou d'assemblage de l'industrie. L'utilisation de telles machines est très répandue notamment dans l'horlogerie, l'électronique ou dans l'industrie mécanique.

Ces machines de fabrication et/ou d'assemblage sont en général alimentées avec des fournitures. Ces fournitures sont par exemple des pierres d'horlogerie, des goupilles, des pieds-vis, des billes, des tenons ou d'autres pièces industrielles.

### Etat de la technique

Les fournitures sont par exemple conditionnées en palette ou en tube. Pour mettre les fournitures en palette ou en tube selon des procédés industriels connus, les fournitures sont saisies par l'intermédiaire d'un préhenseur adapté aux fournitures à saisir et amenées ensuite à un conteneur de conditionnement. Ces procédés, manuels ou automatisés, appelées « pick and place », comprennent en général au moins deux phases opératoires ou mouvements distincts, à savoir la préhension « pick » et la dépose « place ». A titre d'exemple, un robot équipé d'un préhenseur vient chercher une fourniture et la place dans un conteneur, dans un tube ou sur une palette. Pour ce faire le robot effectue des déplacements depuis la zone de prélèvement jusqu'au conteneur et inversement. Ces phases opératoires sont pénalisantes sur le plan de la vitesse et de la cadence de fabrication.

### Divulgation de l'invention

L'objet de la présente invention vise par conséquent à remédier aux inconvénients précités et à fournir un nouveau dispositif de préhension pour le conditionnement de fournitures, simplifiant des opérations d'assemblage ou de stockage.

Un autre objet de la présente invention vise à fournir un nouveau dispositif de préhension pour le conditionnement de fournitures, apte à être monté directement sur une partie mobile d'une machine de fabrication et/ou d'assemblage.

Un autre objet de la présente invention vise à fournir un nouveau dispositif de préhension pour le conditionnement de fournitures, apte à constituer un réservoir tampon de fournitures, dans l'attente d'une utilisation desdites fournitures ou d'un stockage.

Les objets assignés à l'invention sont atteints à l'aide d'un dispositif de préhension pour le conditionnement de fournitures, comportant un réservoir de fournitures, un mécanisme d'extraction pour distribuer les fournitures contenues dans le réservoir, ledit mécanisme d'extraction coopérant avec un moyen de commande pour actionner ledit mécanisme d'extraction lors de la distribution des fournitures, caractérisé en ce qu'il comporte un embout de préhension pour saisir une à une les fournitures et pour les insérer dans le réservoir, la préhension étant effectuée automatiquement par l'intermédiaire d'une pression exercée sur chaque fourniture à prélever par l'extrémité libre de l'embout de préhension, ledit embout de préhension comportant également un moyen de rétention pour retenir les fournitures prélevées, ledit moyen de rétention restant activé en l'absence d'actionnement du mécanisme d'extraction.

Selon un exemple de réalisation du dispositif conforme à l'invention, l'embout de préhension est associé à un moyen d'aspiration pneumatique pour faciliter les opérations de saisie des fournitures.

Selon un exemple de réalisation du dispositif conforme à l'invention, le réservoir est conformé au moins en partie dans l'embout de préhension.

Selon un exemple de réalisation, le dispositif conforme à l'invention comporte des moyens pour modifier les dimensions de la partie du réservoir conformée dans l'embout de préhension, de manière à s'adapter à des fournitures présentant des dimensions ou des formes différentes.

Selon un exemple de réalisation du dispositif conforme à l'invention, le moyen de commande comprend un organe d'actionnement manuel, pneumatique, hydraulique ou électrique.

Selon un exemple de réalisation du dispositif conforme à l'invention, le mécanisme d'extraction comporte un élément du genre tige ou fil, pour transmettre un pas d'avance aux fournitures contenues dans le réservoir lors de la distribution.

Selon un exemple de réalisation du dispositif conforme à l'invention, l'extrémité libre de l'embout de préhension comprend au moins deux branches dont l'écartement délimite une ouverture d'insertion de la partie de réservoir conformée dans l'embout de préhension, lesdites branches étant réalisées dans un matériau élastique de manière à s'écarter à l'encontre d'une force de rappel lors de l'insertion d'une fourniture.

Selon un autre exemple de réalisation du dispositif conforme à l'invention, l'extrémité libre de l'embout de préhension comprend au moins deux branches dont l'écartement délimite une ouverture d'insertion de la partie de réservoir conformée dans l'embout de préhension, lesdites branches étant associées à un moyen de rappel élastique de manière à s'écarter à l'encontre d'une force de rappel lors de l'insertion d'une fourniture.

Selon un exemple de réalisation du dispositif conforme à l'invention, le moyen de rétention comprend un bord saillant sur chaque branche, ledit bord saillant s'étendant dans l'ouverture d'insertion.

Selon un exemple de réalisation du dispositif conforme à l'invention, les branches présentent une face active inclinée venant en contact avec les fournitures pour favoriser l'écartement des branches et la saisie des fournitures.

Selon un autre exemple de réalisation du dispositif conforme à l'invention, l'extrémité libre de l'embout de préhension comporte une membrane flexible présentant une forme en saillie dans la partie de réservoir conformée dans l'embout de préhension, ladite forme en saillie correspondant aux dimensions ou à la forme des fournitures, ladite membrane flexible s'appuyant sur chaque fourniture à saisir.

Selon cet exemple de réalisation du dispositif conforme à l'invention, le moyen de rétention est constitué par la membrane flexible.

Selon un autre exemple de réalisation du dispositif conforme à l'invention, l'embout de préhension comprend au moins deux mors susceptibles de se déplacer radialement par rapport à un cylindre de guidage, lesdits mors comportant chacun un bras d'extrémité pour délimiter le réservoir, l'écartement radial des bras d'extrémité permettant d'insérer une fourniture dans le réservoir et le resserrement des bras d'extrémité permettant de retenir les fournitures saisies dans le réservoir.

Un avantage du dispositif de préhension conforme à l'invention réside dans une simplification des opérations de saisie des fournitures et dans un gain de temps lors de la saisie et du conditionnement des fournitures destinées à des machines d'assemblage.

Grâce à un faible encombrement du dispositif de préhension conforme à l'invention, les fournitures peuvent être stockées dans l'embout de préhension lequel constitue un réservoir tampon et distribuées in situ, directement à partir dudit réservoir lors d'opérations de montage et d'assemblage. Vu leur faible poids et par conséquent leur faible inertie, le dispositif conforme à l'invention peut facilement être monté sur une partie mobile d'une machine.

Le regroupement des moyens de saisie de l'embout de préhension et du réservoir dans un unique dispositif permet d'effectuer simultanément et en un seul mouvement, la saisie et un stockage intermédiaire des fournitures. Les déplacements entre une zone de prélèvement et une zone de dépose des fournitures sont ainsi évités.

Un autre avantage du dispositif conforme à l'invention réside dans son fonctionnement, lequel peut être automatisé ou commandé de façon manuelle. Dans les deux cas un gain de temps est observé pour effectuer la préhension, le stockage et la distribution des fournitures.

### Brève description des dessins

D'autres caractéristiques de la présente invention apparaîtront plus clairement à la lecture de la description qui va suivre, faite en référence au dessin annexé, dans lequel:
- la figure 1 représente une vue d'un exemple de réalisation d'un dispositif de préhension conforme à l'invention partiellement découpé,
- la figure 2 représente une vue d'un autre exemple de réalisation d'un dispositif de préhension conforme à l'invention partiellement découpé,
- la figure 3 représente une vue d'un autre exemple de réalisation d'un dispositif de préhension conforme à l'invention,
- la figure 4 représente une vue d'un autre exemple de réalisation d'un dispositif de préhension conforme à l'invention,
- la figure 5 représente un détail selon une vue en coupe de l'embout de préhension d'un exemple de réalisation d'un dispositif de préhension conforme à l'invention,
- et la figure 6 représente un détail selon une vue en coupe de l'embout de préhension d'un autre exemple de réalisation d'un dispositif de préhension conforme à l'invention.

### Mode(s) de réalisation de l'invention

Les éléments structurellement et fonctionnellement identiques et présents sur plusieurs figures distinctes sont affectés d'une même référence numérique ou alphanumérique.

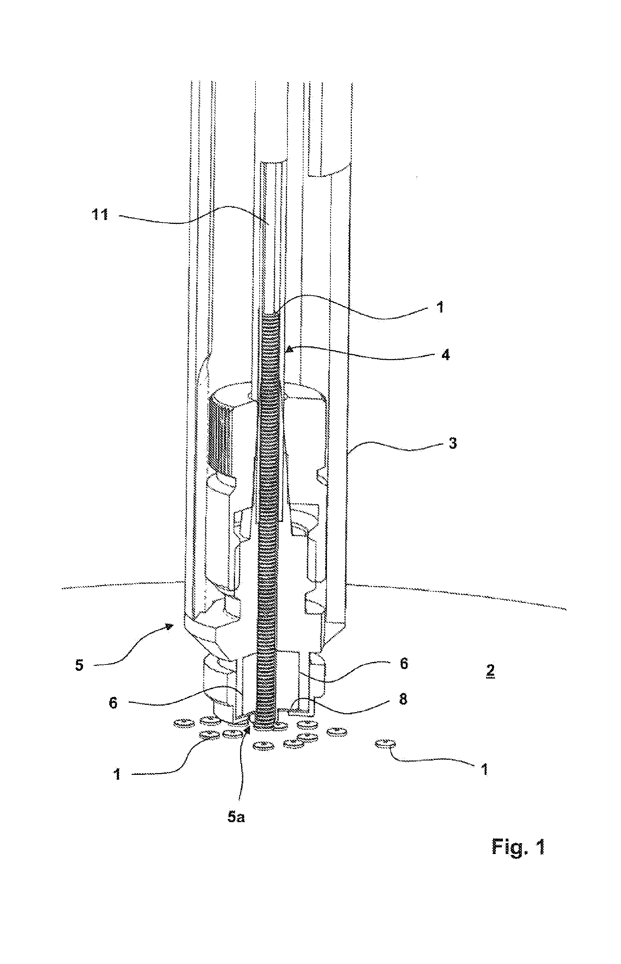

Le dispositif de préhension conforme à l'invention et illustré à la figure 1 est donc destiné notamment à prélever des fournitures 1 disposées par exemple sur un plan de travail 2.

Le dispositif de préhension comporte un manchon de protection 3, tubulaire, dans lequel est agencé un réservoir 4 de stockage de fournitures 1. Ce réservoir 4 est également de forme tubulaire et présente un diamètre plus petit que celui du manchon de protection 3.

Le dispositif de préhension comporte également un mécanisme d'extraction pour distribuer les fournitures 1 contenues dans le réservoir 4. Le mécanisme d'extraction coopère avantageusement avec un moyen de commande pour actionner ledit mécanisme d'extraction.

Le dispositif de préhension comporte un embout de préhension 5 pour saisir une à une les fournitures 1 et pour les insérer dans le réservoir 4.

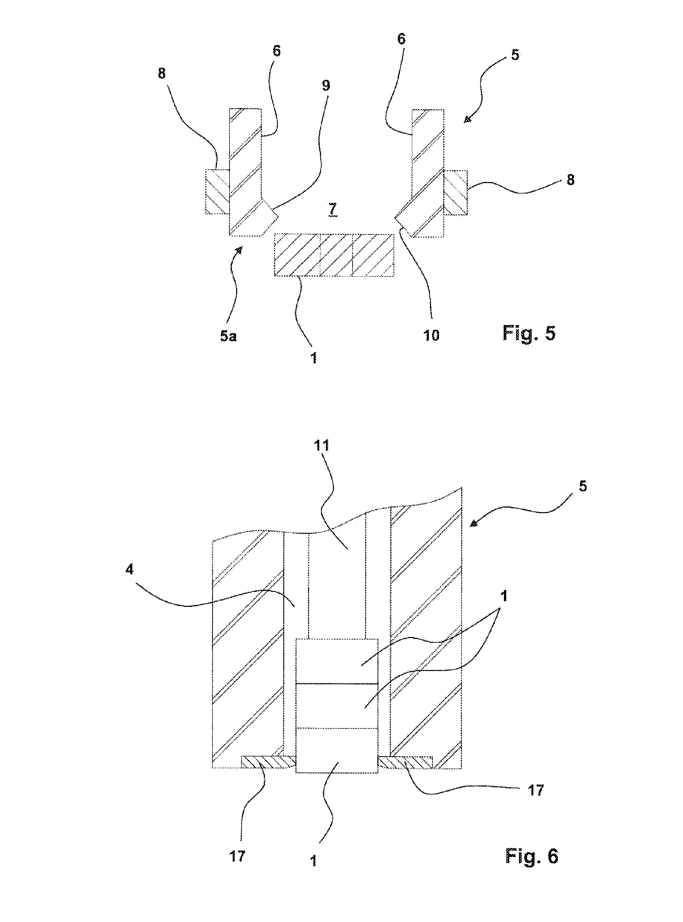

L'embout de préhension 5, par exemple illustré plus en détails à la figure 5, est actionné automatiquement par l'intermédiaire d'une pression exercée sur chaque fourniture 1 par l'extrémité libre 5a dudit embout de préhension 5.

Selon un exemple de réalisation du dispositif conforme à l'invention, l'extrémité libre 5a de l'embout de préhension 5 comprend au moins deux branches 6 dont l'écartement délimite une ouverture d'insertion 7.

Les branches 6 sont associées à un moyen de rappel élastique 8 de manière à s'écarter à l'encontre d'une force de rappel lors de l'insertion d'une fourniture 1.

L'embout de préhension 5 comporte également un moyen de rétention pour retenir les fournitures 1, ledit moyen de rétention retenant les fournitures 1 en l'absence d'actionnement du mécanisme d'extraction.

Selon un exemple de réalisation du dispositif conforme à l'invention, le moyen de rétention comprend un bord saillant 9 sur chaque branche 6. Le bord saillant 9 fait saillie dans l'ouverture d'insertion 7.

Les branches 6 présentent avantageusement une face active inclinée 10 venant en contact avec les fournitures 1 pour favoriser l'écartement des branches 6 et l'insertion des fournitures 1 dans le réservoir 4. Chaque bord saillant 9 s'étend de préférence dans le prolongement d'une face active inclinée 10.

Chaque fourniture 1 saisie est enserrée entre les bords saillants 9 lorsque l'extrémité libre 5a arrive en butée sur le plan de travail 2.

Une pression exercée par les faces actives inclinées 10 sur une fourniture 1 suivante entraîne par conséquent un écartement supplémentaire des branches 6 et la pénétration de la fourniture 1 saisie précédemment au travers de l'ouverture d'insertion 7, jusqu'à une position localisée au-delà des bords saillants 9.

La dernière fourniture 1 saisie est donc retenue par frottement par le moyen de rétention.

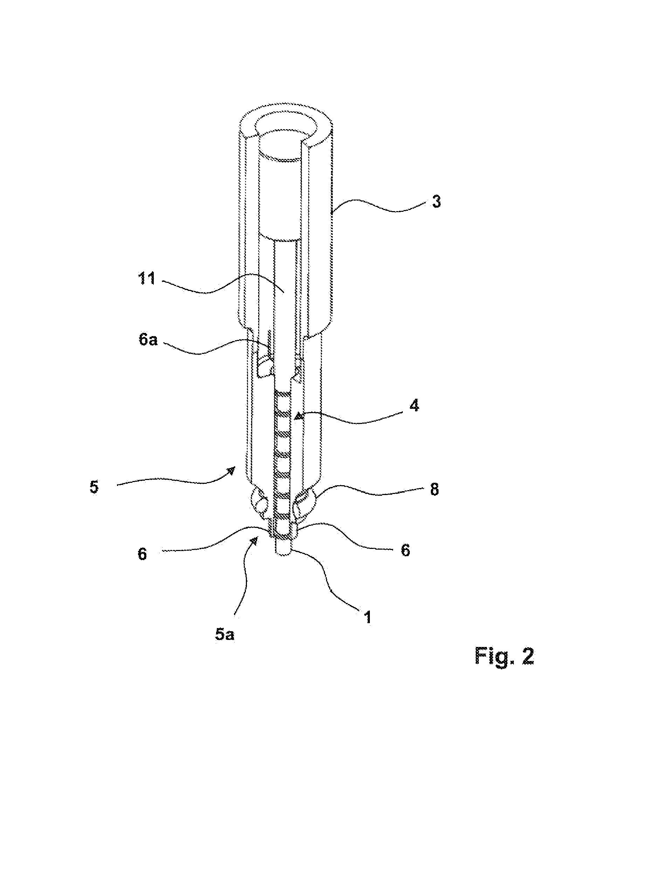

La figure 2 représente une vue d'un autre exemple de réalisation d'un dispositif de préhension conforme à l'invention partiellement découpé. Dans cet exemple de réalisation, une tige 11 exerce une pression sur les fournitures 1 contenues dans le réservoir 4 lors de leur distribution.

Le moyen de rappel élastique 8 est par exemple constitué d'un anneau élastique (O-ring) en caoutchouc s'étendant sur la périphérie des parois constitutives des branches 6. Dans cet exemple de réalisation, le réservoir 4 est directement configuré dans l'embout de préhension 5. Le moyen élastique 8 peut alternativement être réalisé avec un anneau métallique fendu présentant une élasticité suffisante.

Selon un autre exemple de réalisation, les branches 6 peuvent être réalisées dans une pièce monobloc et séparées par des fentes d'élasticité 6a. Le matériau d'une telle pièce monobloc présente avantageusement des propriétés élastiques.

Lors de la saisie d'une fourniture 1, l'extrémité libre 5a exerce une pression suffisante sur ladite fourniture 1, pour contrer la force de rappel de l'anneau élastique fendu, de manière à insérer ladite fourniture 1 dans le réservoir 4.

Lors des opérations de préhension de fournitures 1, le mécanisme d'extraction n'exerce pas de pression, par l'intermédiaire de la tige 11, sur les fournitures 1 contenues dans le réservoir 4.

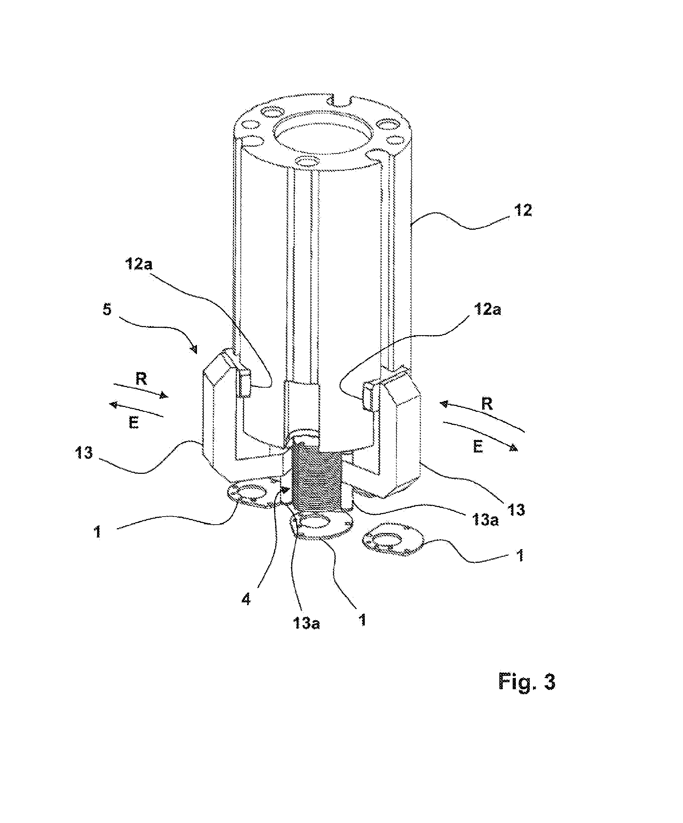

La figure 3 représente une vue partielle d'un autre exemple de réalisation d'un dispositif de préhension conforme à l'invention, dans lequel l'embout de préhension 5 comprend au moins deux mors 13 susceptibles de se déplacer radialement par rapport à un cylindre de guidage 12. Les mors 13 comportent chacun un bras d'extrémité 13a pour délimiter le réservoir 4.

Après un positionnement du dispositif de préhension sur une fourniture 1 à saisir, l'écartement radial des bras d'extrémité 13a selon les flèches E et la descente de tout le dispositif sur la fourniture 1, permet d'insérer ladite fourniture 1 dans le réservoir 4. Le resserrement des bras d'extrémité 13a selon les flèches R, permet d'enserrer et de retenir les fournitures 1 saisies, dans le réservoir 4.

Les mors 13 coulissent radialement grâce à des rainures de guidage 12a ménagées sur le cylindre de guidage 12 lors de chaque saisie de fourniture 1.

Le dispositif de préhension conforme à l'invention comprend par exemple des moyens de commande pneumatique ou électrique pour déplacer les mors 13. Un écartement des mors 13 permet ainsi d'une part de saisir individuellement chaque fourniture 1 et d'autre part de distribuer les fournitures 1 contenues dans le réservoir 4, une à une ou par groupe.

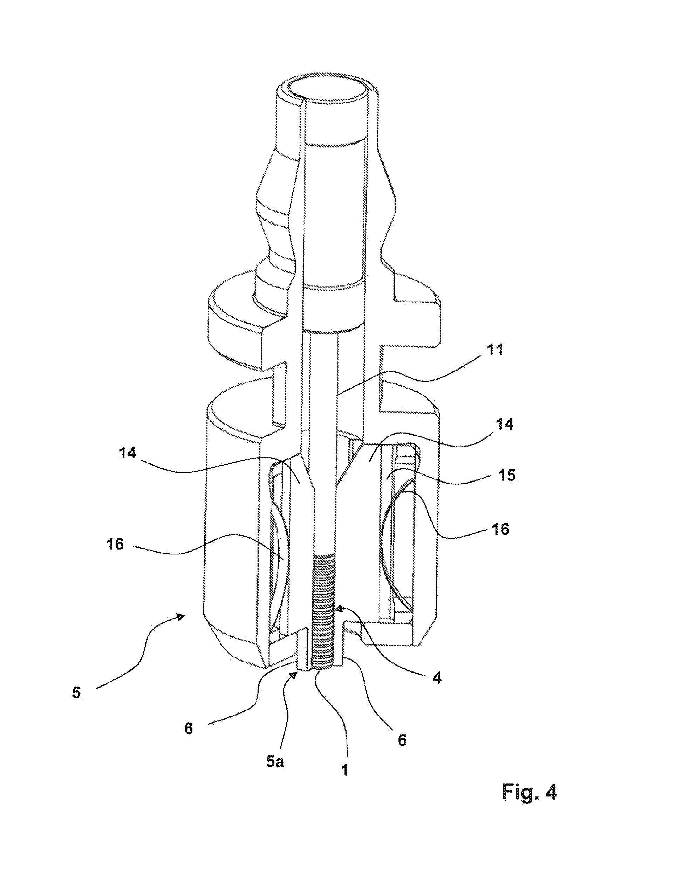

La figure 4 représente une vue partielle et partiellement découpée d'un autre exemple de réalisation d'un dispositif de préhension conforme à l'invention. Dans cet exemple de réalisation, l'embout de préhension 5 comporte des moyens pour modifier les dimensions du réservoir 4 de manière à s'adapter à des fournitures 1 présentant des dimensions et/ou des formes différentes.

A cet effet, le réservoir 4 est délimité par des éléments mobiles 14. Ces derniers se déplacent dans un espace interne 15 de l'embout de préhension 5 et sont contraints par des ressorts 16 dans une position dans laquelle ils sont en contact avec la tige 11 et/ou les contours des fournitures 1 contenues dans le réservoir 4. Le dispositif de préhension conforme à l'invention peut ainsi être utilisé pour le stockage d'empilements de fournitures 1 de dimensions et/ou de formes différentes. Le dispositif de préhension conforme à l'invention utilisé pour saisir un premier type de fournitures 1, peut être réutilisé après la distribution desdites fournitures 1, pour saisir un autre type de fournitures 1 en ne remplaçant que la tige 11.

La tige 11 présente avantageusement le même contour externe que les fournitures 1 à saisir, de manière à dimensionner correctement le réservoir 4 avant l'insertion de la première fourniture 1. Ce dimensionnement est obtenu par l'intermédiaire des éléments mobiles 14 contraints sur ladite tige 11. Le dispositif de préhension est alors apte à saisir les fournitures 1 correspondantes.

Les éléments mobiles 14 constituent ainsi avec leurs extrémités les branches 6 de l'embout de préhension 5. Les ressorts 16 remplacent alors avantageusement le moyen de rappel élastique 8 des exemples illustrés aux figures 2 et 5.

Les ressorts 16, en appui sur la paroi interne de l'espace interne 15, assurent aussi le centrage du réservoir 4 dans l'embout de préhension 5.

Selon un autre exemple de réalisation du dispositif de préhension conforme à l'invention et illustré à la figure 6, l'embout de préhension 5 comporte à son extrémité libre 5a, une membrane flexible 17 présentant une forme en saillie dans la partie de réservoir 4 conformée dans ledit embout de préhension 5. La forme en saillie correspond sensiblement aux dimensions et/ou à la forme des fournitures 1.

La membrane flexible 17 est destinée à appuyer sur chaque fourniture 1 à saisir. La membrane flexible 17 retient par frottement la dernière fourniture 1 saisie et constitue ainsi le moyen de rétention.

Il est évident que la présente description ne se limite pas aux exemples explicitement décrits, mais inclue également d'autres modes de réalisation et/ou de mise en oeuvre. Ainsi, une caractéristique technique ou une étape de mise en oeuvre peut être remplacée respectivement par une caractéristique équivalente ou une étape équivalente sans sortir du cadre de la présente invention.

## Revendications

1. Dispositif de préhension pour le conditionnement de fournitures, comportant un réservoir (4) de fournitures (1), un mécanisme d'extraction pour distribuer les fournitures (1) contenues dans le réservoir (4), ledit mécanisme d'extraction coopérant avec un moyen de commande pour actionner ledit mécanisme d'extraction lors de la distribution des fournitures (1),
**caractérisé en ce qu'**il comporte un embout de préhension (5) pour saisir une à une les fournitures (1) et pour les insérer dans le réservoir (4), la préhension étant effectuée automatiquement par l'intermédiaire d'une pression exercée sur chaque fourniture (1) à prélever par l'extrémité libre (5a) de l'embout de préhension (5), ledit embout de préhension (5) comportant également un moyen de rétention pour retenir les fournitures (1) prélevées, ledit moyen de rétention restant activé en l'absence d'actionnement du mécanisme d'extraction.

2. Dispositif selon la revendication 1, **caractérisé en ce que** l'embout de préhension (5) est associé à un moyen d'aspiration pneumatique pour faciliter les opérations de saisie des fournitures (1).

3. Dispositif selon la revendication 1 ou 2, **caractérisé en ce que** le réservoir (4) est conformé au moins en partie dans l'embout de préhension (5).

4. Dispositif selon la revendication 3, **caractérisé en ce qu'**il comporte des moyens pour modifier les dimensions de la partie du réservoir (4) conformée dans l'embout de préhension (5), de manière à s'adapter à des fournitures (1) présentant des dimensions ou des formes différentes.

5. Dispositif selon l'une quelconque ces revendications 1 à 4, **caractérisé en ce que** le moyen de commande comprend un organe d'actionnement manuel, pneumatique, hydraulique ou électrique.

6. Dispositif selon l'une quelconque des revendications 1 à 5, **caractérisé en ce que** le mécanisme d'extraction comporte un élément du genre tige (11) ou fil, pour transmettre un pas d'avance aux fournitures (1) contenues dans le réservoir (4) lors de la distribution.

7. Dispositif selon l'une quelconque des revendications 1 à 6, **caractérisé en ce que** l'extrémité libre (5a) de l'embout de préhension (5) comprend au moins deux branches (6) dont l'écartement délimite une ouverture d'insertion (7) de la partie de réservoir (4) conformée dans l'embout de préhension (5), lesdites branches (6) étant réalisées dans un matériau élastique de manière à s'écarter à l'encontre d'une force de rappel lors de l'insertion d'une fourniture (1).

8. Dispositif selon l'une quelconque des revendications 1 à 7, **caractérisé en ce que** l'extrémité libre (5a) de l'embout de préhension (5) comprend au moins deux branches (6) dont l'écartement délimite une ouverture d'insertion (7) de la partie de réservoir (4) conformée dans l'embout de préhension (5), lesdites branches (6) étant associées à un moyen de rappel élastique (8) de manière à s'écarter à l'encontre d'une force de rappel lors de l'insertion d'une fourniture (1).

9. Dispositif selon l'une quelconque des revendications 1 à 8, **caractérisé en ce que** le moyen de rétention comprend un bord saillant (9) sur chaque branche (6), ledit bord saillant (9) s'étendant dans l'ouverture d'insertion (7).

10. Dispositif selon l'une quelconque des revendications 7 à 9, **caractérisé en ce que** les branches (6) présentent une face active inclinée (10) venant en contact avec les fournitures (1) pour favoriser l'écartement des branches (6) et la saisie des fournitures (1).

11. Dispositif selon l'une quelconque des revendications 1 à 6, **caractérisé en ce que** l'extrémité libre (5a) de l'embout de préhension (5) comporte une membrane flexible (17) présentant une forme en saillie dans la partie de réservoir (4) conformée dans l'embout de préhension (5), ladite forme en saillie correspondant aux dimensions ou à la forme des fournitures (1), ladite membrane flexible (17) s'appuyant sur chaque fourniture (1) à saisir.

12. Dispositif selon la revendication 11, **caractérisé en ce que** le moyen de rétention est constitué par la membrane flexible (17).

13. Dispositif selon l'une quelconque des revendications 1 à 5, **caractérisé en ce que** l'embout de préhension (5) comprend au moins deux mors (13) susceptibles de se déplacer radialement par rapport à un cylindre de guidage (12), lesdits mors (13) comportant chacun un bras d'extrémité (13a) pour délimiter le réservoir (4), l'écartement radial des bras d'extrémité (13a) permettant d'insérer une fourniture (1) dans le réservoir (4) et le resserrement des bras d'extrémité (13a) permettant de retenir les fournitures (1) saisies dans le réservoir (4).
